(19) Europäisches Patentamt
European Patent Office
Office européen des brevets

(11) EP 4 249 203 A1

(12) **EUROPEAN PATENT APPLICATION**
published in accordance with Art. 153(4) EPC

(43) Date of publication:
**27.09.2023 Bulletin 2023/39**

(21) Application number: **21894731.5**

(22) Date of filing: **18.11.2021**

(51) International Patent Classification (IPC):
***B29C 45/37*** *(2006.01)* ***C08L 67/00*** *(2006.01)*
***C08G 63/60*** *(2006.01)* ***F16L 11/06*** *(2006.01)*
***F16L 43/00*** *(2006.01)*

(52) Cooperative Patent Classification (CPC):
**B29C 45/37; C08G 63/60; C08L 67/00; F16L 11/06; F16L 43/00**

(86) International application number:
**PCT/JP2021/042486**

(87) International publication number:
**WO 2022/107859 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.11.2020 JP 2020191506**

(71) Applicant: **SUMITOMO CHEMICAL COMPANY, LIMITED**
**Tokyo 103-6020 (JP)**

(72) Inventor: **SAKAI Taiga**
**Tsukuba-shi, Ibaraki 300-3294 (JP)**

(74) Representative: **Vossius & Partner**
**Patentanwälte Rechtsanwälte mbB**
**Siebertstraße 3**
**81675 München (DE)**

(54) **RESIN-MADE PIPE**

(57) A resin-made pipe is provided, the resin-made pipe containing: a liquid crystal polyester resin composition as a formation material, in which the pipe has a bending part, a melt viscosity of the liquid crystal polyester resin composition satisfies Formula (A), and an arithmetic mean roughness (Ra) of an inner surface of the pipe in an extension direction is 0.2 $\mu$m or more and 5 $\mu$m or less.

$$B/A \leq 10 \quad (A)$$

(A is a melt viscosity of the liquid crystal polyester resin composition at a temperature being a flow starting temperature + 20°C, and B is a melt viscosity of the liquid crystal polyester resin composition at the flow starting temperature.)

FIG. 1

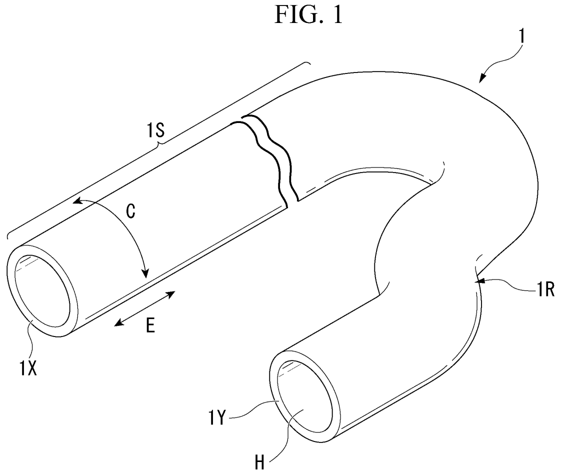


EP 4 249 203 A1

## Description

### Technical Field

The present invention relates to a resin-made pipe.

Priority is claimed on Japanese Patent Application No. 2020-191506, filed November 18, 2020, the content of which is incorporated herein by reference.

### Background Art

In recent years, studies have been made to replace conventional components made of metal with components made of resin to reduce the weight of vehicle components. One of vehicle components becoming a replacement target like this is a tubular molded product (pipe). Pipes are often disposed through gaps between various constitutions such as engines and gearboxes. Therefore, resin-made pipes used as vehicle components often have complicated shapes with bending parts.

As a process for producing a resin-made pipe having a complicated shape as described above, for example, a manufacturing method in which a floating core disposed in a metal mold for injection molding is moved by a pressurized fluid is known (refer to Patent Document 1, for example). An injection-molded product obtained by this manufacturing method is a resin-made pipe molded wherein a portion through which the floating core has moved is molded into a hollow.

### Citation List

### Patent Document

[Patent Document 1]
Japanese Unexamined Patent Application, First Publication No. 2009-281636

### Summary of Invention

### Problems to be solved by Invention

Patent Document 1 discloses an example in which a polyamide was used as a resin. However, polyamides are known to be unlikely to solidify in a metal mold. Therefore, when a polyamide is used in the manufacturing method of Patent Document 1, it is assumed that there will be a problem of the occurrence of the deviation in thickness of the pipe between the upper and lower sides in the direction of gravitational force due to a molten polyamide flowing until it solidifies in the metal mold. When such a deviation occurs in thickness of the pipe, the pipe tends to break in relatively thin parts of the pipe.

On the other hand, when increasing the thickness of the pipe to prevent pipe breakage, weight reduction is hindered. Therefore, there is still room for studies of resin-made pipes having complicated shapes.

The present invention has been made in view of such circumstances, and an object of the present invention is to provide a novel resin-made pipe.

### Means to Solve the Problems

In order to achieve the above-mentioned object, one embodiment of the present invention includes the following embodiments.

[1] A resin-made pipe containing: a liquid crystal polyester resin composition as a formation material, in which the pipe has a bending part, a melt viscosity of the liquid crystal polyester resin composition satisfies Formula (A), and an arithmetic mean roughness (Ra) of an inner surface of the pipe in an extension direction is 0.2 μm or more and 5 μm or less.

$$B/A \leq 10 \qquad (A)$$

(A is a melt viscosity of the liquid crystal polyester resin composition at a temperature being a flow starting temperature + 20°C, and B is a melt viscosity of the liquid crystal polyester resin composition at the flow starting temperature.)

[2] The resin-made pipe according to [1], in which the liquid crystal polyester resin composition comprises a liquid

crystal polyester having a repeating unit represented by Formula (1), a repeating unit represented by Formula (2), and a repeating unit represented by Formula (3), and a content of the repeating unit having a 2,6-naphthylene group in the liquid crystal polyester is 40 mol% or more and 75 mol% or less based on all of the repeating units.

(1) $-O-Ar^1-CO-$

(2) $-CO-Ar^2-CO-$

(3) $-X-Ar^3-Y-$

(In the formulas, $Ar^1$ represents a 2,6-naphthylene group, a 1,4-phenylene group, or a 4,4'-biphenylylene group; $Ar^2$ and $Ar^3$ each independently represent a 2,6-naphthylene group, a 1,4-phenylene group, a 1,3-phenylene group, or a 4,4'-biphenylylene group; X and Y each independently represent an oxygen atom or an imino group (-NH-); and hydrogen atoms of the group represented by $Ar^1$, $Ar^2$, or $Ar^3$ may be each independently substituted with a halogen atom, an alkyl group, or an aryl group.)

[3] The resin-made pipe according to [1] or [2], in which the liquid crystal polyester resin composition comprises a plate-like filler.

[4] The resin-made pipe according to any one of [1] to [3], in which the resin-made pipe has a total length of 300 mm or more, an outer diameter of 5 mm or more and a ratio of an inner diameter to the outer diameter is equal to or more than 0.6 and less than 1.

[5] The resin-made pipe according to any one of [1] to [4], in which when thicknesses are measured at substantially equally-spaced four points in a circumferential direction at each of any five to ten measurement sites in the extension direction, a difference between a maximum value and a minimum value of the thicknesses at all measurement points is 500 μm or less.

[6] The resin-made pipe according to any one of [1] to [5], in which the bending part has a part having a curvature radius of 10 mm or less.

[7] The resin-made pipe according to any one of [1] to [6], in which Ais 5 Pa s or more and 200 Pa s or less.

The present invention further includes the following aspects.

[8] The resin-made pipe according to any one of [1] to [7], in which the melt viscosity of the liquid crystal polyester resin composition satisfies Formula (A)-1.

$$1 \leq B/A \leq 10 \qquad (A)\text{-}1$$

[9] The resin-made pipe according to any one of [1] to [8], in which a total length is 300 mm or more and 2,000 mm or less, an outer diameter is 5 mm or more and 30 mm or less, and a ratio of an inner diameter to the outer diameter is 0.6 or more and 0.9 or less.

[10] The resin-made pipe according to any one of [1] to [9], in which A is 20 Pa s or more and 100 Pa·s or less, and the melt viscosity of the liquid crystal polyester resin composition satisfies Formula (A)-2.

$$2 \leq B/A \leq 5 \qquad (A)\text{-}2$$

Effects of Invention

According to the present invention, a novel resin-made pipe can be provided.

Brief Description of Drawings

FIG. 1 is a schematic perspective view showing a resin-made pipe 1 of an embodiment.

FIG. 2 is a schematic view showing a process for producing the pipe 1 of the present embodiment.

FIG. 3 is a schematic view showing the process for producing the pipe 1 of the present embodiment.

FIG. 4 is a schematic view showing a pipe 10 manufactured in the Examples.

Embodiments for Carrying out Invention

A resin-made pipe of the present embodiment is a pipe made of a liquid crystal polyester resin composition as a formation material and has a bending part. The melt viscosity of the liquid crystal polyester resin composition satisfies Formula (A). Furthermore, the arithmetic mean roughness (Ra) of the inner surface of the pipe in an extension direction is 0.2 μm or more and 5 μm or less.

$$B/A \leq 10 \qquad (A)$$

(A is a melt viscosity of the liquid crystal polyester resin composition at a temperature being a flow starting temperature + 20°C, and B is a melt viscosity of the liquid crystal polyester resin composition at the flow starting temperature.)
Hereinafter, the liquid crystal polyester resin composition may be simply abbreviated as "resin composition".

(Method for measuring melt viscosity)

The melt viscosity (unit: Pa s) of the resin composition is measured by the following method using a flow tester ("CFT-500EX" manufactured by Shimadzu Corporation). For example, the melt viscosity (A) of the resin composition at a temperature being the flow starting temperature + 20°C is measured by the following method.
A die having a nozzle with an inner diameter of 1 mm and a length of 10 mm is attached to the tip end of the cylinder, and the cylinder is heated to a temperature being the flow starting temperature of the resin composition + 20°C. The cylinder is filled with about 2 g of the resin composition and maintained for 5 minutes to melt the resin composition. In consideration of weighing errors of the device, "about 2 g" can be estimated as 2 g ±0.1 g.
A load of 9.8 MPa is applied to the molten resin composition to measure the viscosity of the molten resin extruded from the nozzle, thereby obtaining the intended melt viscosity (A). The measurement of the melt viscosity was performed only once.
Similarly, the melt viscosity (B) of the resin composition at the flow starting temperature is measured in the same method as the above-mentioned method except that the heating temperature of the cylinder is set as the flow starting temperature of the resin composition.

(Method for measuring flow starting temperature)

The flow starting temperature is also referred to as a flow temperature, and is a temperature at which a viscosity of 4,800 Pa s (48,000 poise) is exhibited when a liquid crystal polymer is melted to be extruded from a nozzle with an inner diameter of 1 mm and a length of 10 mm while raising the temperature at a rate of 4°C/minute under a load of 9.8 MPa (100 kgf/$cm^2$) using a capillary rheometer. The flow starting temperature serves as a guide of the molecular weight of liquid crystal polymers (refer to "Liquid Crystal Polymers - Synthesis/Molding/Application -" edited by Naoyuki KOIDE, CMC Publishing CO., LTD., June 5, 1987, p. 95).
Hereinafter, a resin-made pipe 1 according to the present embodiment will be described in order with reference to FIGS. 1 to 3. In all of the drawings below, the dimensions, ratios, and the like of each constituent element are appropriately changed to make the drawings easier to see. Furthermore, in the following description, the resin-made pipe 1 may be simply referred to as "pipe 1".
FIG. 1 is a schematic perspective view showing the pipe 1. As shown in FIG. 1, the pipe 1 has a bending part 1R. In addition, as shown in FIG. 1, the pipe 1 may have an elongated part 1S that is linearly extended.
Conventionally, as a method for molding a pipe having a bending part, a method in which a plurality of members of a pipe are separately molded and then each of the members is joined is known. Specific examples thereof include a method in which a pipe having a bending part is molded by separately molding a plurality of pieces in an extension direction with an elongated part and the bending part as separate members, and then the members are joined. Furthermore, examples of publicly known methods include a method in which a pipe having a bending part is molded by separately molding members in a circumferential direction, and theneach of the members are fusion-welded to form a tube structure. The pipes molded by these methods have joints among members in the circumferential direction of the pipe or in the extension direction of the pipe.
On the other hand, the pipe 1 does not have a joint in a circumferential direction C and an extension direction E, and is integrally molded from one end 1X to the other end 1Y in the extension direction. Therefore, the pipe tends to have high strength as compared to those having joints.
In the present specification, the phrase "integrally formed" means being formed as one member (one member from the time of molding). In this meaning, the pipe 1 differs from a pipe, in which two or more members have been "integrated" into one, such as the pipe molded by the above-mentioned publicly known method.

Furthermore, the pipe 1 has a through-hole H that penetrates from one end 1X to the other end 1Y along the extension direction E of the pipe 1.

FIGS. 2 and 3 are schematic views showing a process for producing the pipe 1, and are partially cutaway views of a metal mold 100. In manufacturing the pipe 1, the metal mold 100 for injection molding is used. The metal mold 100 is constituted of a pair of molds 100a and 100b.

The metal mold 100 has a cavity 110 that complementarily matches the outside shape of the pipe 1. Furthermore, a gate 100g is formed in the metal mold 100. To the gate 100g, a cylinder 200 for melting the resin composition which is the raw material of the pipe 1 is connected. A molten resin R is injected into the cavity 110 through the gate 100g by the cylinder 200.

A pressurization port 111 is provided at one end of the cavity 110 in the metal mold 100. To the pressurization port 111, pressurization means (not shown) for injecting a pressurized fluid into the metal mold 100 through the pressurization port 111 is connected. Examples of the pressurized fluid include any one of a gas (1) that does not react with a liquid crystal polyester at an injection molding temperature and under an injection molding pressure, a gas (2) that is not miscible therewith, a liquid (3) that does not react therewith, and a liquid (4) that is not miscible therewith. Examples of the pressurized fluid include nitrogen gas, carbon dioxide gas, air, glycerin, water, and liquid paraffin.

The pressure of the pressurized fluid supplied to the pressurization port 111 is about 4.90 to 29.42 MPa, for example. The pressure of the pressurized fluid varies depending on the type of resin used, the size of a floating core 150, and the viscosity of the molten resin R under the temperature conditions at the time of molding. Therefore, it is desirable to appropriately adjust the pressure of the pressurized fluid by performing a preliminary experiment.

The floating core 150 that blocks the pressurization port 111 from the cavity 110 side is enclosed in the cavity 110 of the metal mold 100. The floating core 150 is pushed by the pressurized fluid injected into the cavity 110 from the pressurization port 111 and is movable from one end to the other end of the cavity 110.

The floating core 150 may be spherical or spindle-shaped.

The floating core 150 that is spherical is preferable because a difference in thickness (the distance from the outer surface to the inner surface of the pipe) of the pipe is less likely to be made in the circumferential direction of the manufactured pipe.

In the following description, the state in which a difference in thickness of the pipe is made in the circumferential direction of the pipe may be referred to as "thickness deviation".

An ejection port 112 is provided at the other end of the cavity 110 in the metal mold 100. The ejection port 112 is provided so as to be openable and closable. A housing part 130 is connected to the ejection port 112. The housing part 130 has an inner space 130x that houses the molten resin R.

When manufacturing the pipe 1, first, the molten resin R is injected into the metal mold 100 as shown in FIG. 2. At that time, the pressurization port 111 is blocked by the floating core 150. In addition, the ejection port 112 is closed.

Subsequently, before the molten resin R solidifies, the ejection port 112 is opened, and a pressurized fluid F is injected into the cavity 110 through the pressurization port 111 from the pressurization means (not shown) as shown in FIG. 3. Thereby, the floating core 150 moves from one end to the other end of the cavity 110 with pushing the molten resin R forward in the moving direction.

The molten resin R pushed by the floating core 150 is ejected to the housing part 130 through the ejection port 112. As a result, the through-hole H of the pipe 1 is formed at the position through which the floating core 150 has passed, and thereby the pipe 1 is manufactured. The diameter of the through-hole H is equivalent to the diameter of the floating core 150 in the visual field from the moving direction of the floating core 150.

The arithmetic mean roughness (Ra) of the inner surface of the pipe 1 manufactured as above is 0.2 $\mu$m or more and 5 $\mu$m or less in the extension direction of the pipe 1. The shape of the metal mold surface facing the cavity 110 is transferred to the outer surface of the pipe 1, that is, the surface in contact with the metal mold 100. For example, when the metal mold surface facing the cavity 110 is mirror-finished, the mirror-finished shape is transferred to the outer surface of the pipe 1, and the arithmetic mean roughness (Ra) is expected to be less than 0.2 $\mu$m.

On the other hand, the arithmetic mean roughness (Ra) of the inner surface of the pipe 1 is larger than that of the mirror surface due to scratches or the like caused by the movement of the floating core 150. In addition, the inner surface of the pipe 1 is leveled by the movement of the floating core 150. Due to this, the arithmetic mean roughness (Ra) of the inner surface of the pipe 1 is larger than the arithmetic mean roughness (Ra) of the outer surface of the pipe 1 and is 0.2 $\mu$m or more and 5 or less, as the characteristic of the pipe 1 manufactured by the above-mentioned manufacturing method. In other words, whether the pipe 1 has been manufactured by the above-mentioned manufacturing method can be confirmed by the state in which the arithmetic mean roughness (Ra) of the inner surface of the pipe 1 is larger than the arithmetic mean roughness (Ra) of the outer surface of the pipe 1, and/or by the state in which the arithmetic mean roughness (Ra) of the inner surface is 0.2 $\mu$m or more and 5 $\mu$m or less.

The arithmetic mean roughness (Ra) of the inner surface of the pipe 1 may be 0.2 $\mu$m or more, may be 0.5 $\mu$m or more, or may be 1.0 $\mu$m or more. In addition, the arithmetic mean roughness (Ra) of the inner surface of the pipe 1 is preferably 4.3 $\mu$m or less, more preferably 4.0 $\mu$m or less, and even more preferably 3.5 $\mu$m or less.

The upper limit value and the lower limit value of the arithmetic mean roughness (Ra) of the inner surface of the pipe 1 can be arbitrarily combined. For example, the arithmetic mean roughness (Ra) may be 0.2 μm or more and 4.3 μm or less, is more preferably 0.2 μm or more and 4.0 μm or less, and is even more preferably 0.2 μm or more and 3.5 μm or less. When the arithmetic mean roughness of the inner surface is within this range, this is preferable because then the flow of a fluid flowing inside the pipe is not disturbed.

(Method for measuring arithmetic mean roughness (Ra))

For the arithmetic mean roughness (Ra), a value of a test piece measured using a non-contact surface roughness meter (for example, "SE600LK-31" manufactured by Kosaka Laboratory Ltd.) in accordance with "JIS B 0601: 1982" is adopted.

The test piece is produced by cutting the pipe to a length of 20 mm in the extension direction to obtain a small pipe piece, and further dividing the small pipe piece into four equal parts in the circumferential direction. The arithmetic mean roughness (Ra) is obtained by measuring the test piece in the extension direction of the pipe using the above-mentioned device. The measurement is performed on each of the four test pieces obtained by dividing the small pipe piece into four parts, and the arithmetic mean value of the obtained measurement values is taken as the arithmetic mean roughness (Ra) to be obtained.

(Liquid crystal polyester resin composition)

The pipe 1 is made of the liquid crystal polyester resin composition as the formation material. The resin composition contains a liquid crystal polyester and a filling material.

Conventionally, as a pipe obtained by the manufacturing method shown in FIGS. 2 and 3, an example of manufacturing using a polyamide such as nylon as a material is known. However, the studies by the inventors of the present invention revealed that a solidification speed of a polyamide is too slow to be applied to the above-mentioned manufacturing method. Therefore, it has been revealed that when a polyamide is used as a material in the above-mentioned manufacturing method, the polyamide in the cavity 110 is likely to sag in the direction of gravitational force after the floating core 150 has passed through, thereby easily causing a thickness deviation. When the thickness deviation occurs in the pipe, the compressive strength of relatively thin parts becomes low, making the pipe susceptible to breakage.

Furthermore, at the time of manufacturing the pipe using a polyamide, when increasing the thickness of the pipe to prevent pipe breakage, this hinders weight reduction.

On the other hand, the inventors of the present invention repeated studies and realized that the problem of a thickness deviation in the above-mentioned case of using a polyamide can be solved by using a liquid crystal polyester, which has a relatively faster solidification speed than a polyamide, as a material. Furthermore, since the problem of a thickness deviation is solved, the weight can be reduced by thinly molding the pipe.

The liquid crystal polyester is known to have a low melt viscosity at the time of melting. Therefore, there is an advantage in that the metal mold is easily filled with a molten resin when manufacturing a resin molded product (resin-made pipe) having a complicated shape as shown in FIG. 1. However, the solidification speed is excessively fast depending on the type of liquid crystal polyester, and it may not be possible to mold a pipe having an appropriate shape.

In this regard, as a result of repeated studies by the inventors of the present invention, they revealed that the problem can be solved by using a resin composition, which has a melt viscosity satisfying Formula (A), as a material for the pipe 1.

$$B/A \leq 10 \qquad (A)$$

(A is a melt viscosity of the liquid crystal polyester resin composition at a temperature being a flow starting temperature + 20°C, and B is a melt viscosity of the liquid crystal polyester resin composition at the flow starting temperature.)

The melt viscosity of the resin composition tends to increase as the addition rate of the filling material increases. In preparing the resin composition which is the material of the pipe 1, the melt viscosity can be adjusted by adjusting the amount of the filling material.

In addition, the melt viscosity of the liquid crystal polyester resin composition can be adjusted also by changing at least one of the type of liquid crystal polyester and the type of filling material.

It should be noted that [temperature being flow starting temperature of liquid crystal polyester resin composition + 20°C] is a temperature which becomes a guide for a "molding temperature" in the above-mentioned manufacturing method. In the cylinder 200, the resin composition is melted by being heated to a temperature for which [temperature being flow starting temperature of liquid crystal polyester resin composition + 20°C] is taken as a guide. In the cylinder 200, the resin composition may be melted by being heated to [temperature being flow starting temperature of liquid

crystal polyester resin composition + 20°C].

B/A mentioned above indicates the ratio between [temperature being flow starting temperature of liquid crystal polyester resin composition + 20°C] which becomes a guide for the molding temperature, and the flow starting temperature. Regarding a resin composition having a large B/A value, when the molten resin R is injected into the metal mold 100, the molten resin R is cooled in the metal mold 100 and its viscosity rapidly increases, resulting in loss of fluidity. Therefore, it tends to be difficult to manufacture the pipe 1 using the resin composition having a large B/A value.

On the other hand, by using a resin composition having a B/A value of 10 or less as a material, the pipe 1 having suitably high compressive strength is obtained.

When the melt viscosity of the resin composition satisfies Formula (A), the pipe 1 can be suitably manufactured by the above-mentioned manufacturing method. Since the obtained pipe 1 has no joints in the extension direction E and the circumferential direction C, it has a higher compressive strength than a pipe having joints and manufactured by a conventional manufacturing method using the same resin composition.

Furthermore, the molten resin of the resin composition that is the material of the pipe 1 has a solidification speed faster than that of a polyamide, and thus is less likely to sag in the direction of gravitational force in the cavity 110, making a thickness deviation less likely to occur. Therefore, relatively thin parts are less likely to be generated in the obtained pipe 1 and breakage are less likely to occur.

Furthermore, since the thickness deviation is less likely to occur, it is no longer required to thickly mold the pipe to prevent breakage of the pipe, making it possible to reduce the weight.

Ais preferably 5 Pa s or more, more preferably 10 Pa s or more, and even more preferably 20 Pa·s or more. In addition, A is preferably 200 Pa·s or less, more preferably 150 Pa·s or less, and even more preferably 100 Pa·s or less.

The upper limit value and the lower limit value of A can be arbitrarily combined. For example, A is preferably 5 Pa s or more and 200 Pa s or less, more preferably 10 Pa·s or more and 150 Pa s or less, and even more preferably 20 Pa s or more and 100 Pa s or less.

The melt viscosity of the resin composition decreases as the temperature increases. Therefore, B/A is more than one.

B/A is preferably 1 or more, more preferably 1.5 or more, and even more preferably 2 or more. In addition, B/A is preferably 10 or less, more preferably 8 or less, and even more preferably 5 or less.

The upper limit value and the lower limit value of B/A can be arbitrarily combined.

For example, B/A is preferably 1 or more and 10 or less ($1 \leq B/A \leq 10$), more preferably 1.5 or more and 8 or less ($1.5 \leq B/A \leq 8$), and even more preferably 2 or more and 5 or less ($2 \leq B/A \leq 5$).

(Liquid crystal polyester)

The liquid crystal polyester constituting the resin composition is one of thermotropic liquid crystal polymers, and is a polymer capable of forming a melt showing optical anisotropy at a temperature of 450°C or lower.

The liquid crystal polyester that is the material of the pipe 1 of the present embodiment preferably has a repeating unit represented by General Formula (1), and more preferably has the repeating unit (1), a repeating unit represented by General Formula (2), and a repeating unit represented by General Formula (3).

Hereinafter, the repeating unit represented by General Formula (1) may be referred to as a "repeating unit (1)".

The repeating unit represented by General Formula (2) may be referred to as a "repeating unit (2)".

The repeating unit represented by General Formula (3) may be referred to as a "repeating unit (3)".

(1) $-O-Ar^1-CO-$

(2) $-CO-Ar^2-CO-$

(3) $-X-Ar^3-Y-$

(In the formula, $Ar^1$ represents a phenylene group, a naphthylene group, or a biphenylylene group; $Ar^2$ and $Ar^3$ each independently represent a phenylene group, a naphthylene group, a biphenylylene group, or a group represented by General Formula (4); X and Y each independently represent an oxygen atom or an imino group (-NH-); and one or more hydrogen atoms in the group represented by $Ar^1$, $Ar^2$, or $Ar^3$ may be each independently substituted with a halogen atom, an alkyl group, or an aryl group.)

(4) $-Ar^4-Z-Ar^5-$

(In the formula, $Ar^4$ and $Ar^5$ each independently represent a phenylene group or a naphthylene group; and

Z represents an oxygen atom, a sulfur atom, a carbonyl group, a sulfonyl group, or an alkylidene group.)

Specific examples of liquid crystal polyesters used as the material of the pipe 1 are as follows:

(a) a polymer obtained by polymerizing a combination of an aromatic hydroxycarboxylic acid, an aromatic dicarboxylic acid, and an aromatic diol;
(b) a polymer obtained by polymerizing a plurality of types of aromatic hydroxycarboxylic acids;
(c) a polymer obtained by polymerizing a combination of an aromatic dicarboxylic acid and an aromatic diol; and
(d) a polymer obtained by reacting a crystalline polyester such as polyethylene terephthalate with an aromatic hydroxycarboxylic acid.

In manufacturing the liquid crystal polyester, a part or all of aromatic hydroxycarboxylic acid, aromatic dicarboxylic acid, and aromatic diol, which are used as the raw material monomer, can be previously made into an ester-forming derivative to be used for polymerization. An ester-forming property means a property capable of forming an ester bond. By using such an ester-forming derivative, there is an advantage in that the liquid crystal polyester can be manufactured more easily.

Examples of the ester-forming derivative include the following compounds.

Examples of the ester-forming derivative of aromatic hydroxycarboxylic acid and aromatic dicarboxylic acid which have a carboxy group in a molecule include compounds in which the carboxy group is converted to a highly reactive group such as a haloformyl group (acid halide) or an acyloxycarbonyl group (acid anhydride), and compounds in which the carboxy group forms an ester with monohydric alcohols, polyhydric alcohols such as ethylene glycol, phenols, and the like so that polyester is generated by transesterification reaction.

Examples of polymerizable derivatives of compounds having a phenolic hydroxyl group, such as aromatic hydroxycarboxylic acids and aromatic diols, include compounds in which the phenolic hydroxyl group forms an ester with lower carboxylic acids so that polyester is generated by a transesterification reaction.

Furthermore, as long as the ester-forming property is not inhibited, the above-mentioned aromatic hydroxycarboxylic acid, aromatic dicarboxylic acid, or aromatic diol may have, in an aromatic ring in a molecule, a halogen atom such as a chlorine atom and a fluorine atom; an alkyl group having 1 to 10 carbon atoms such as a methyl group, an ethyl group, and a butyl group; and an aryl group having 6 to 20 carbon atoms such as a phenyl group, as a substituent.

(Repeating unit (1))

Examples of the aromatic hydroxycarboxylic acid include p-hydroxybenzoic acid, m-hydroxybenzoic acid, 6-hydroxy-2-naphthoic acid, 3-hydroxy-2-naphthoic acid, 5-hydroxy-1-naphthoic acid, and 4-hydroxy-4'-carboxydiphenyl ether. Examples thereof further include an aromatic hydroxycarboxylic acid in which a part of hydrogen atoms in the aromatic ring of these aromatic hydroxycarboxylic acids is substituted with one or more substituents selected from the group consisting of an alkyl group, an aryl group, and a halogen atom.

The p-hydroxybenzoic acid is an aromatic hydroxycarboxylic acid that induces ($A_1$) to be described later.

The 6-hydroxy-2-naphthoic acid is an aromatic hydroxycarboxylic acid that induces ($A_2$) to be described later.

For the aromatic hydroxycarboxylic acid, one type may be used alone, or two or more types may be used in combination in manufacturing the liquid crystal polyester.

The repeating unit (1) described above is a repeating unit derived from a predetermined aromatic hydroxycarboxylic acid. Examples of the repeating unit derived from an aromatic hydroxycarboxylic acid include repeating units described below. In the repeating unit derived from an aromatic hydroxycarboxylic acid, a part of the hydrogen atom in the aromatic ring may be substituted with one or more substituents selected from the group consisting of a halogen atom, an alkyl group, and an aryl group.

In the present specification, the term "derived" means that chemical structures change for the polymerization of a raw material monomer and no other structural changes occur.

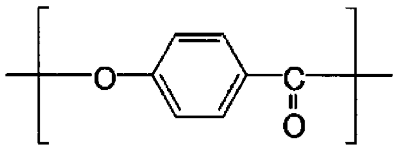

($A_1$)

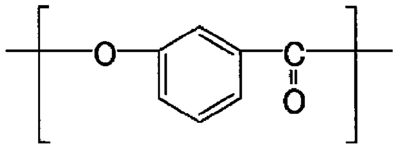

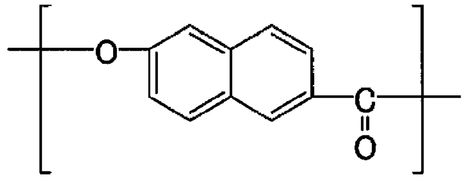

($A_2$)

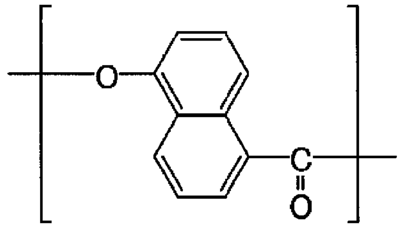

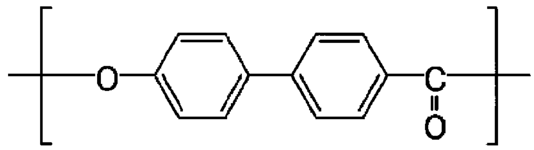

(Repeating unit (2))

Examples of the aromatic dicarboxylic acid include terephthalic acid, isophthalic acid, biphenyl-4,4'-dicarboxylic acid, 2,6-naphthalenedicarboxylic acid, diphenyl ether-4,4'-dicarboxylic acid, and diphenylthioether-4,4'-dicarboxylic acid. Examples thereof further include an aromatic dicarboxylic acid in which a part of hydrogen atoms in the aromatic ring of these aromatic dicarboxylic acids is substituted with one or more substituents selected from the group consisting of an alkyl group, an aryl group, and a halogen atom.

The terephthalic acid is an aromatic dicarboxylic acid that induces ($B_1$) to be described later.

The isophthalic acid is an aromatic dicarboxylic acid that induces ($B_2$) to be described later.

The 2,6-naphthalenedicarboxylic acid is an aromatic dicarboxylic acid that induces ($B_3$) to be described later.

For the aromatic dicarboxylic acid, one type may be used alone or two or more types may be used in combination in manufacturing liquid crystal polyester.

The repeating unit (2) described above is a repeating unit derived from a predetermined aromatic dicarboxylic acid. Examples of the repeating unit derived from an aromatic dicarboxylic acid include repeating units shown below. In the repeating unit derived from an aromatic dicarboxylic acid, a part of the hydrogen atom in the aromatic ring may be substituted with one or more substituents selected from the group consisting of a halogen atom, an alkyl group, and an aryl group.

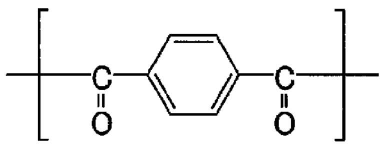

($B_1$)

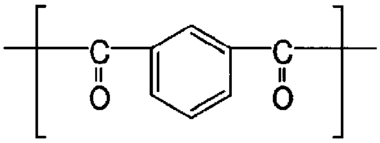

(B2)

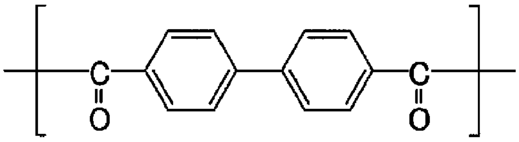

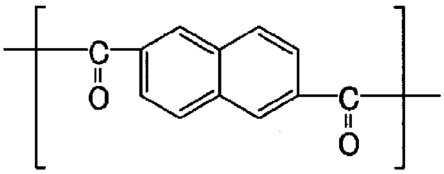

(B3)

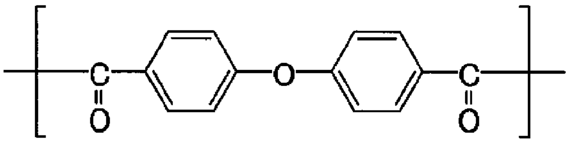

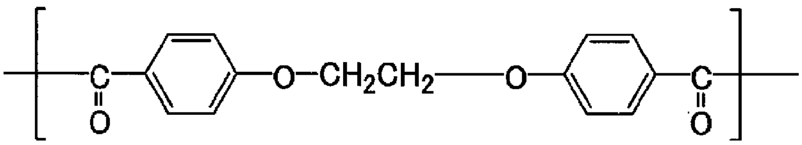

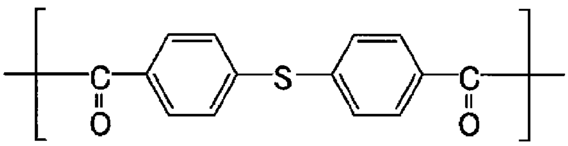

(Repeating unit (3))

Examples of the aromatic diol include 4,4'-dihydroxybiphenyl, hydroquinone, resorcin, 4,4'-dihydroxydiphenylketone, 4,4'-dihydroxydiphenyl ether, bis(4-hydroxyphenyl)methane, 1,2-bis(4-hydroxyphenyl)ethane, 4,4'-dihydroxydiphenyl sulfone, 4,4'-dihydroxydiphenyl thioether, 2,6-dihydroxynaphthalene, and 1,5-dihydroxynaphthalene. Examples thereof further include an aromatic diol in which a part of hydrogen atoms in the aromatic ring of these aromatic diols is substituted with one or more substituents selected from the group consisting of an alkyl group, an aryl group, and a halogen atom.

The 4,4'-dihydroxybiphenyl is an aromatic diol that induces ($C_1$) to be described later.

The hydroquinone is an aromatic diol that induces ($C_2$) to be described later.

The resorcin is an aromatic diol that induces ($C_3$) to be described later.

For the aromatic diol, one type may be used alone or two or more types may be used in combination in manufacturing liquid crystal polyester.

The repeating unit (3) described above includes a repeating unit derived from a predetermined aromatic diol. Examples of the repeating unit derived from an aromatic diol include repeating units shown below. In the repeating unit derived from an aromatic diol, a part of the hydrogen atom in the aromatic ring may be substituted with one or more substituents selected from the group consisting of a halogen atom, an alkyl group, and an aryl group.

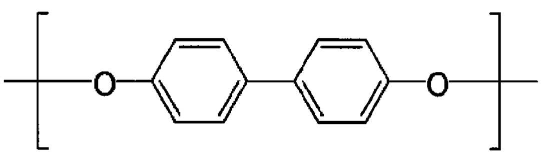

(C1)

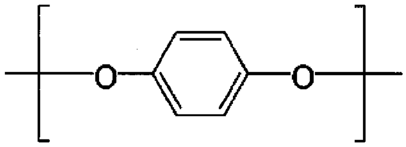

$(C_2)$

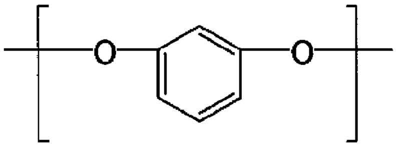

$(C_3)$

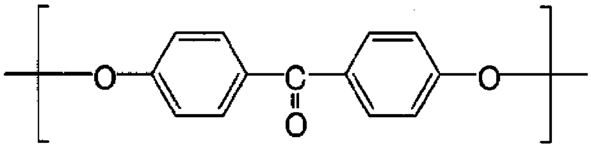

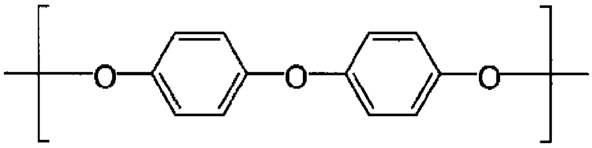

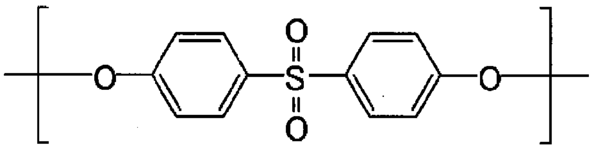

Examples of substituents that may be arbitrarily included by each of the repeating unit derived from the aromatic hydroxycarboxylic acid, the repeating unit derived from the aromatic dicarboxylic acid, and the repeating unit derived from the aromatic diol include the following substituents.

Examples of the halogen atoms include a fluorine atom, a chlorine atom, and a bromine atom.

Examples of the alkyl group include a lower alkyl group having about 1 to 4 carbon atoms, such as a methyl group, an ethyl group, and a butyl group.

Examples of the aryl group include a phenyl group.

A particularly suitable liquid crystal polyester will be described.

The suitable liquid crystal polyester has the repeating unit represented by Formula (1), the repeating unit represented by Formula (2), and the repeating unit represented by Formula (3), provided that the content of the repeating unit having a 2,6-naphthylene group is 40 mol% or more and 75 mol% or less with respect to all of the repeating units. The content of the repeating unit having a 2,6-naphthylene group is preferably 55 mol% or more and 75 mol% or less with respect to all of the repeating units.

(1) $-O-Ar^1-CO-$

(2) $-CO-Ar^2-CO-$

(3) $-X-Ar^3-Y-$

In the suitable liquid crystal polyester, $Ar^1$ is a 2,6-naphthylene group, a 1,4-phenylene group, or a 4,4'-biphenylylene group; and $Ar^2$ and $Ar^3$ are each independently a 2,6-naphthylene group, a 1,4-phenylene group, a 1,3-phenylene group, or a 4,4'-biphenylylene group. X and Y each independently represent an oxygen atom or an imino group (-NH-).

As described above, hydrogen atoms of the group represented by $Ar^1$, $Ar^2$, or $Ar^3$ may be each independently substituted with a halogen atom, an alkyl group, or an aryl group.

Regarding the liquid crystal polyester, the "content of the repeating unit having a 2,6-naphthylene group with respect to all of the repeating units" can be calculated by measuring the liquid crystal polyester at 400°C as a decomposition temperature using a reaction pyrolysis gas chromatography/mass spectrometry.

In the liquid crystal polyester, when the content of the repeating unit having a 2,6-naphthylene group is 75 mol% or less with respect to all of the repeating units, the liquid crystallinity of the molten resin is less likely to be lost. Therefore, such a liquid crystal polyester can easily ensure the fluidity of the molten resin and is excellent in processability. In addition, when the content is 40 mol% or more, it is difficult to hydrolyze. Therefore, with such a liquid crystal polyester, an appropriate viscosity can be easily set at the time of melt-kneading, and thereby a favorable pipe can be formed.

The melt viscosity of the resin composition containing the above-mentioned suitable liquid crystal polyester does not become excessively high at the molding temperature, which makes it easy to manufacture the resin-made pipe of the present embodiment by the above-mentioned manufacturing method. The "molding temperature" is appropriately set according to the characteristics of a molding machine used based on a temperature being [flow starting temperature of liquid crystal polyester resin composition] + 20°C as a guide.

In the liquid crystal polyester, the content of the repeating unit (1) is preferably 30 mol% or more and 80 mol% or less, more preferably 40 mol% or more and 70 mol% or less, and even more preferably 45 mol% or more and 65 mol% or less with respect to the total amount of all of the repeating units.

Furthermore, the content of the repeating unit (2) is preferably 10 mol% or more and 35 mol% or less, more preferably 15 mol% or more and 30 mol% or less, and even more preferably 17.5 mol% or more and 27.5 mol% or less with respect to the total amount of all of the repeating units.

Furthermore, the content of the repeating unit (3) is preferably 10 mol% or more and 35 mol% or less, more preferably 15 mol% or more and 30 mol% or less, and even more preferably 17.5 mol% or more and 27.5 mol% or less with respect to the total amount of all of the repeating units.

The liquid crystal polyester having a predetermined repeating unit composition as described above has an excellent balance between heat resistance and moldability. It is preferable that the content of the repeating unit (2) and the content of the repeating unit (3) be substantially equal.

Specifically, the liquid crystal polyester used as the material of the pipe 1 is preferably the following (I), more preferably the following (II), and even more preferably the following (III).

(I): A liquid crystal polyester in which the content of the repeating unit (1) is 30 mol% or more and 80 mol% or less, the content of the repeating unit (2) is 10 mol% or more and 35 mol% or less, and the content of the repeating unit (3) is 10 mol% or more and 35 mol% or less with respect to the content of all of the repeating units.

(II): A liquid crystal polyester in which the content of the repeating unit (1) is 40 mol% or more and 70 mol% or less, the content of the repeating unit (2) is 15 mol% or more and 30 mol% or less, and the content of the repeating unit (3) is 15 mol% or more and 30 mol% or less with respect to the content of all of the repeating units.

(III): A liquid crystal polyester in which the content of the repeating unit (1) is 45 mol% or more and 65 mol% or less, the content of the repeating unit (2) is 17.5 mol% or more and 27.5 mol% or less, and the content of the repeating unit (3) is 17.5 mol% or more and 27.5 mol% or less with respect to the content of all of the repeating units.

In addition, the liquid crystal polyester may have a repeating unit other than the repeating units (1) to (3), if necessary. The content of such a repeating unit is preferably 10 mol% or less, and more preferably 5 mol% or less with respect to the total amount of all of the repeating units.

(Filling material)

The resin composition contains the filling material (filler). The filling material may be an organic filler or may be an inorganic filler. The filler may be a spherical filler, may be a fibrous filler, or may be a plate-like filler, but a plate-like filler is preferable.

As the filler, one type may be used alone, or two or more types may be used in combination. Regarding the "type" of the filler, in the case of a fibrous filler for example, when any one of the material or the shape (fiber length and fiber diameter) is different, this is considered as a different type. In addition, fillers sold as products are judged to be of different types if they are of different product grades. The same applies to other organic fillers and inorganic fillers.

Examples of granular fillers include silica, alumina, titanium oxide, glass beads, glass balloons, boron nitride, silicon carbide, and calcium carbonate.

Examples of the fibrous fillers include glass fibers, carbon fibers, ceramic fibers, and metal fibers.

Examples of glass fibers include chopped glass fibers and milled glass fibers.

The chopped glass fibers refer to fibers (glass chopped strands) obtained by cutting a fiber bundle (glass strands) such that a length is 1.5 to 25 mm, provided that the fiber bundle is obtained by directly paralleling and bundling a plurality of single glass fibers pulled out from a spinning nozzle.

The milled glass fibers refer to fibers (milled fibers) obtained by grinding or cutting glass strands to about less than 1 mm.

Examples of the carbon fibers include PAN-based carbon fibers and pitch-based carbon fibers.

Examples of the ceramic fibers include silica fibers, alumina fibers, and silica-alumina fibers.

Examples of the metal fibers include stainless steel fibers.

Examples of the fibrous fillers further include whiskers such as potassium titanate whiskers, barium titanate whiskers, wollastonite whiskers, aluminum borate whiskers, silicon nitride whiskers, and silicon carbide whiskers.

Examples of the plate-like fillers include talc, mica, graphite, wollastonite, glass flakes, barium sulfate, and calcium carbonate. The mica may be muscovite, may be phlogopite, may be fluorophlogopite, or may be tetrasilisic mica.

The content of the inorganic filler in the resin composition is preferably more than 0 parts by mass and equal to or less than 100 parts by mass, more preferably 10 parts by mass or more and 100 parts by mass or less, even more preferably 20 parts by mass or more and 90 parts by mass or less, and particularly preferably more than 20 parts by mass and equal to or less than 80 parts by mass with respect to 100 parts by mass of the liquid crystal polyester.

The upper limit value and the lower limit value of the content of the inorganic filler can be combined arbitrarily.

Hereinbelow, glass fibers, talc, and mica among the inorganic fillers will be described in more detail.

(Fibrous filler: glass fibers)

The number average fiber length of the glass fibers that may be contained in the above-mentioned resin composition may be 10 μm or more and 2,000 μm or less, may be 20 μm or more and 1,000 μm or less, may be 30 μm or more and 800 μm or less, may be 40 μm or more and 500 μm or less, or may be 45 μm or more and 400 μm or less.

The upper limit value and the lower limit value of the number average fiber length of the glass fibers can be combined arbitrarily.

The number average fiber length of the glass fibers contained in the resin composition can be obtained by the following method.

First, 5 g of the resin composition is heated at 600°C for 4 hours in an air atmosphere in a muffle furnace (manufactured by Yamato Scientific Co., Ltd., "FP410") to remove the resin, thereby obtaining ashing residues containing glass fibers. A mixed liquid is adjusted by putting 0.3 g of the ashing residues into 50 mL of pure water, and the mixed liquid is irradiated with ultrasonic waves for 5 minutes using an ultrasonic washing machine (manufactured by VELVO-CLEAR, model number: VS-25). Thus, the ashing residues are uniformly dispersed in the water, thereby obtaining a sample liquid in which the glass fibers are dispersed.

Although pure water is used in the above-mentioned method, a surfactant aqueous solution may be used instead of pure water to promote the dispersion of the ashing residues. It is preferable to determine the concentration of the surfactant by a preliminary experiment such that the concentration is a concentration at which the dispersion of the ashing residues is promoted and excessive foaming due to ultrasonic irradiation is not caused.

Subsequently, 5 mL of the sample liquid is diluted 5-fold with pure water to obtain a sample liquid. For the obtained sample liquid, the glass components in the liquid are imaged one by one using a particle shape image analyzer ("Rapid VUE" manufactured by Beckman Coulter, Inc.). The imaged glass fibers are observed from a visual field direction. The length in a longitudinal direction is read as the fiber length, and the length in the direction orthogonal to the longitudinal direction is read as the fiber diameter.

The measurement is terminated when the number of the measured glass fibers reaches 10,000. The arithmetic mean value of the fiber lengths of 10,000 glass fibers from the fiber lengths of each of the glass fibers obtained is obtained and taken as the number average fiber length of the glass fibers.

The number average fiber length of the glass fibers contained in the pipe after molding can be also measured by the above-mentioned method.

When the number average fiber length of the glass fibers is equal to or less than the above-mentioned upper limit value, a plasticizing time of injection molding can be set to a favorable time. Meanwhile, when the number average fiber length of the glass fibers is equal to or more than the above-mentioned lower limit value, the flexural elasticity modulus of the pipe 1 can be expected to become high.

According to the manufacturing method shown in FIGS. 2 and 3, the extension direction of the pipe corresponds to the flow direction (MD direction) of the molten resin, and the circumferential direction of the pipe corresponds to the direction (TD direction) orthogonal to the flow of the molten resin. Therefore, it is thought that each of the flexural elasticity moduli in the extension direction and the circumferential direction of the pipe are correlated with the flexural elasticity modulus of a test piece measured in a model experiment to be described later. In the present embodiment, by measuring the physical properties of the test piece in the model experiment by a method to be described later, the flexural elasticity modulus in the extension direction and the flexural elasticity modulus in the circumferential direction of the pipe can be evaluated.

(Method for measuring flexural elasticity modulus)

First, the liquid crystal polyester resin composition as the material of the pipe is pelletized, and the obtained

pellets are injection-molded to mold two flat sheets with 100 mm × 100 mm × 1.6 mm.

From the molded flat sheet, three test pieces with 10 mm (TD) × 100 mm (MD) × 1.6 mm are cut out by aligning the long side with the flow direction (MD direction) of the resin and aligning the short side with the direction (TD direction) orthogonal to the flow of the resin.

The elastic modulus of the obtained test piece is measured three times using a universal tester (TENSILON RTG-1250 manufactured by A&D Company, Limited), and the arithmetic mean value of the measurement values is taken as the flexural elasticity modulus (unit: GPa) in the MD direction.

The measurement conditions of the elastic modulus are: a distance between spans = (test piece thickness (unit: mm)) × 15.6 mm, and a test rate = 1 mm/minute.

Similarly, three test pieces with 10 mm (MD) × 100 mm (TD) × 1.6 mm are cut out by aligning the short side with the flow direction (MD direction) of the resin and aligning the long side with the direction (TD direction) orthogonal to the flow of the resin.

The obtained test pieces are measured by the above-mentioned method to obtain the flexural elasticity modulus (unit: GPa) in the TD direction.

Regarding the obtained flexural elasticity modulus, the flexural elasticity modulus in the MD direction to the flexural elasticity modulus in the TD direction (MD direction/TD direction) is obtained, and the obtained value is taken as an index of the elastic modulus anisotropy of the pipe. As the value of the elastic modulus anisotropy approaches 1, this can be evaluated that the anisotropy of the elastic modulus is small.

In addition, because a liquid crystal polyester has a property of being oriented in the resin flow direction, the flexural elasticity modulus in the MD direction is usually larger than the flexural elasticity modulus in the TD direction. Therefore, the minimum value of the evaluation values of the elastic modulus anisotropy is 1.

Glass fibers preferably have a substantially circular cross-sectional shape in a radial direction. Whether the cross-sectional shape of the glass fibers in the radial direction is substantially circular can be confirmed by impregnating the glass fibers with a resin to cure them, forming a cross section of the obtained cured product in the direction intersecting the fiber length direction of the glass fibers, and confirming a transverse section of the glass fibers exposed in the cross section with a scanning electron microscope (SEM). The SEM is used because cross-sectional observation is difficult with an optical microscope.

The diameter of the above-mentioned glass fiber is preferably 5 μm or more and 17 μm or less, more preferably 6 μm or more and 15 μm or less, and even more preferably 9 μm or more and 12 μm or less.

The upper limit value and the lower limit value of the diameter of the glass fibers can be combined arbitrarily.

The diameter of the glass fibers can be obtained by a B method described in JIS R 3420:2013 (Testing methods for textile glass products).

(Content)

The content of the glass fibers in the resin composition is preferably more than 0 parts by mass and equal to or less than 100 parts by mass, more preferably 10 parts by mass or more and 100 parts by mass or less, even more preferably 10 parts by mass or more and 70 parts by mass or less, and much more preferably 20 parts by mass or more and 60 parts by mass or less with respect to 100 parts by mass of the liquid crystal polyester.

The upper limit value and the lower limit value of the content of the glass fibers can be combined arbitrarily. For example, the content is preferably more than 0 parts by mass and equal to or less than 100 parts by mass, more preferably 10 parts by mass or more and 100 parts by mass or less, even more preferably 10 parts by mass or more and 70 parts by mass or less, and much more preferably 20 parts by mass or more and 60 parts by mass or less with respect to 100 parts by mass of the liquid crystal polyester.

When the content of the glass fibers is within the above-mentioned range, shrinkage in the flow direction of the molten resin and in the direction orthogonal to the flow direction is prevented in the molded pipe and warping and distortion of the pipe are less likely to occur. Furthermore, when the content of the glass fiber is within the above-mentioned range, the molding process is easily carried out because the melt viscosity of the resin composition is not excessively high and the molten resin easily flows.

Examples of materials of the glass fibers include E-glass, A-glass, C-glass, D-glass, AR-glass, R-glass, S-glass, and mixtures thereof. Among them, E-glass is preferable from the viewpoint of its excellent strength and easy availability.

The above-mentioned glass fibers may be fibers treated with a coupling agent such as a silane-based coupling agent or a titanium-based coupling agent as necessary.

The above-mentioned glass fibers may be coated with a thermoplastic resin such as a urethane resin, an acrylic resin, and an ethylene/vinyl acetate copolymer, or a thermosetting resin such as epoxy resin. In addition, the above-mentioned glass fibers may be treated with a sizing agent.

(Plate-like filler: talc)

Examples of talc that may be contained in the resin composition include ground products of minerals consisting of silicate minerals and magnesium hydroxide. Talc may form a structure in which an octahedral structure formed from three magnesium (Mg) oxides/hydroxides is inserted between four tetrahedral structures formed from a silicon (Si) oxide having four atoms.

Examples of methods for manufacturing talc include known manufacturing methods, for example, dry-type grinding methods such as frictional crushing-type grinding methods by a roller mill, a Raymond mill, or the like; impact-type grinding methods by an atomizer, a hammer mill, a micron mill, or the like; and impact-type grinding methods by a jet mill, a ball mill, or the like.

Alternatively, wet-type grinding methods in which a ground talc powder is dispersed in water to form a slurry having a flowable viscosity, and grinding is performed by a ball mill, a bead mill, a wet-type jet mill, a Discoplex, or the like may be used. Among the manufacturing methods, the dry-type grinding methods are preferable from the viewpoint of low cost and ease of implementation.

The surface of talc may be treated with a coupling agent or the like for the purpose of improving the wettability between the talc and the molten liquid crystal polyester. Alternatively, talc that has been subj ected to a heat treatment process for the purpose of removing impurities and hardening the talc may be used. Alternatively, talc has been compression-molded into tablets for the purpose of facilitating handling may be used.

The content of the talc in the resin composition is preferably more than 0 parts by mass, more preferably 10 parts by mass or more, and even more preferably 20 parts by mass or more with respect to 100 parts by mass of the liquid crystal polyester. Furthermore, the content of the talc in the resin composition is preferably 100 parts by mass or less, more preferably 85 parts by mass or less, and even more preferably 65 parts by mass or less with respect to 100 parts by mass of the liquid crystal polyester.

The upper limit value and the lower limit value of the content of the talc can be combined arbitrarily. The content is preferably more than 0 parts by mass and equal to or less than 100 parts by mass, more preferably 10 parts by mass or more and 100 parts by mass or less, even more preferably 10 parts by mass or more and 85 parts by mass or less, and much more preferably 20 parts by mass or more and 65 parts by mass or less with respect to 100 parts by mass of the liquid crystal polyester.

In the resin composition in which the content of the talc is within such a range, both molding processability and mechanical strength of a molded product are excellent.

The volume average particle diameter of the talc can be measured by a laser diffraction method. Using a scattering-type particle size distribution measurement device ("LA-950V2" manufactured by HORIBA, Ltd.) as a measurement device, the volume average particle diameter can be calculated under the following measurement conditions in a state in which the talc is dispersed in water.

[Measurement conditions]

Particle refractive index: 1.59 - 0.11
Dispersion medium: water
Dispersion medium refractive index: 1.33

The volume average particle diameter of the talc contained in the resin composition is preferably 5 μm or more, more preferably 15 μm or more, and even more preferably 20 μm or more. In addition, the volume average particle diameter of the talc is preferably 25 μm or less, more preferably 24.5 μm or less, and even more preferably 24 μm or less.

The upper limit value and the lower limit value of the volume average particle diameter of the talc can be combined arbitrarily. The volume average particle diameter of the talc is preferably 5 μm or more and 25 μm or less, more preferably 15 μm or more and 24.5 μm or less, and even more preferably 20 μm or more and 24 μm or less.

(Plate-like filler: mica)

Micas are pulverized products of silicate minerals containing aluminum, potassium, magnesium, sodium, iron, or the like. Micas are minerals that form a structure in which an octahedral structure formed from two or three metal oxides/hydroxides is inserted between four tetrahedral structures formed from a silicon (Si) oxide having three atoms and aluminum (Al) having one atom.

Mica that may be contained in the resin composition may be any of muscovite, phlogopite, fluorophlogopite, tetrasilisic mica, and artificially manufactured synthetic mica. The mica preferably consists substantially of muscovite.

The term "substantially" means that muscovite accounts for 99 vol% or more based on the total mica used.

Examples of methods for manufacturing mica include water jet grinding, wet-type grinding, dry-type ball mill grinding, pressure roller mill grinding, air jet mill grinding, and dry-type grinding by an impact grinding machine such as an atomizer. A wet-type grinding method is preferable because mica can be thinly and finely ground.

In addition, when performing wet-type grinding, it is preferable not to use a flocculated sedimentation agent or a sedimentation aid during grinding. Examples of the flocculated sedimentation agent and the sedimentation aid include polyaluminum chloride, aluminum sulfate, aluminum sulfate, ferrous sulfate, ferric sulfate, chlorinated copperas, polyferric sulfate, polyferric chloride, an iron-silica inorganic polymer flocculant, a ferric chloride-silica inorganic polymer flocculant, slaked lime ($Ca(OH)_2$), caustic soda (NaOH), and soda ash ($Na_2CO_3$). The flocculated sedimentation agent and the sedimentation aid promote the dispersion of ground mica in water, thereby facilitating the grinding process, but decomposition of the liquid crystal polyester may be caused.

The volume average particle diameter of the mica is preferably 20 μm or more, more preferably 21 μm or more, and particularly preferably 22 μm or more. The volume average particle diameter of the mica is preferably 45 μm or less, more preferably 44 μm or less, and particularly preferably 43 μm or less.

The upper limit value and the lower limit value of the volume average particle diameter of the mica can be combined arbitrarily. The volume average particle diameter of the mica is preferably 20 μm or more and 45 μm or less, more preferably 21 μm or more and 44 μm or less, and particularly preferably 22 μm or more and 43 μm or less.

The volume average particle diameter of the mica can be measured by a laser diffraction method. Using a scattering-type particle size distribution measurement device ("LA-950V2" manufactured by HORIBA, Ltd.) as a measurement device, the volume average particle diameter can be calculated under the following measurement conditions in a state in which the mica is dispersed in water.

[Measurement conditions]

Particle refractive index: 1.57 - 0.1 i
Dispersion medium: water
Dispersion medium refractive index: 1.33

The mica having such a volume average particle diameter is easily mixed with the molten liquid crystal polyester. Therefore, the resin composition containing the mica having the above-mentioned volume average particle diameter easily flows when melted.

The content of the mica in the resin composition is preferably 5 parts by mass or more, more preferably 10 parts by mass or more, and particularly preferably 30 parts by mass or more with respect to 100 parts by mass of the liquid crystal polyester. Furthermore, the content of the mica in the resin composition is preferably 100 parts by mass or less, more preferably 80 parts by mass or less, and particularly preferably 60 parts by mass or less with respect to 100 parts by mass of the liquid crystal polyester.

The above-mentioned upper limit value and the above-mentioned lower limit value of the content of the mica can be combined arbitrarily. For example, the content is preferably 5 parts by mass or more and 100 parts by mass or less, more preferably 10 parts by mass or more and 80 parts by mass or less, and particularly preferably 30 parts by mass or more and 60 parts by mass or less with respect to 100 parts by mass of the liquid crystal polyester.

Liquid crystal polyesters have a property of being easily oriented in the flow direction of the molten resin. Therefore, in a molded product made of liquid crystal polyester as a material, a strength in the direction orthogonal to the orientation direction of the resin is likely to be reduced. When this is applied to the pipe 1 manufactured by the above-mentioned manufacturing method, in the pipe made of liquid crystal polyester as a material, the liquid crystal polyester is likely to be oriented in the extension direction E of the pipe, and the strength in the circumferential direction C is likely to be reduced. As a result, in the pipe made of liquid crystal polyester as a material, a strength in the direction spreading in the circumferential direction C, that is, a compressive strength is likely to be reduced.

It is known that when the resin composition contains a plate-like filler, the liquid crystal polyester is more difficult to orient in the flow direction than when the resin composition contains a spherical filler or a fibrous filler. Therefore, the pipe 1 containing the plate-like filler in the resin composition that is the material is preferable because a higher compressive strength tends to be exhibited than pipes in which the resin composition contains a spherical filler or a fibrous filler.

The compressive strength can be evaluated by measuring the following tensile failure strength.

(Method for measuring tensile failure strength)

Four annular test pieces with a length of 10 mm are cut out from an elongated part of the pipe in the extension

direction. The tensile failure strength (unit: N) of the obtained test piece is measured under the measurement conditions of a test rate of 5 mm/minute using a universal tester (TENSILON RTG-1250, manufactured by A&D Company, Limited). The maximum stress in the tensile test is measured for each of the four test pieces, and the average value of the measurement values is defined as the tensile failure strength (unit: N).

The pipe 1 manufactured by the above-mentioned manufacturing method preferably has a total length of 300 mm or longer, an outer diameter of 5 mm or more, and a ratio of the inner diameter to the outer diameter of equal to or more than 0.6 and less than 1.

The "total length" of the pipe 1 is the distance measured along the central axis of the pipe 1 from one end of the pipe 1 to the other end of the pipe 1.

For example, the total length of the pipe 1 is preferably 350 mm or longer, and more preferably 400 mm or longer. Furthermore, the total length of the pipe 1 is preferably 2,000 mm or shorter, and more preferably 1,000 mm or shorter.

The upper limit value and the lower limit value of the total length of the pipe 1 can be combined arbitrarily.

The outer diameter of the pipe 1 is preferably 5 mm or more, and more preferably 10 mm or more. Furthermore, the outer diameter of the pipe 1 is preferably 30 mm or less, and more preferably 25 mm or less.

The upper limit value and the lower limit value of the outer diameter of the pipe 1 can be combined arbitrarily.

The ratio of the inner diameter to the outer diameter of the pipe 1 is preferably 0.7 or more, and more preferably 0.8 or more. Furthermore, the ratio of the inner diameter to the outer diameter of the pipe 1 is preferably 0.95 or less, and more preferably 0.9 or less.

Regarding the ratio of the inner diameter to the outer diameter of the pipe 1, the upper limit value and the lower limit value can be arbitrarily combined.

When the above-mentioned ratio is 0.7 or more, it becomes easy to flow a required amount of fluid. Furthermore, when the ratio is 0.95 or less, cracking of the pipe can be prevented even when stress concentrates on the bending part during use of the pipe.

For example, the pipe 1 preferably has a total length of 350 mm or longer, an outer diameter of 10 mm or more, and a ratio of the inner diameter to the outer diameter of 0.8 or more and 0.9 or less.

In addition, in the pipe 1, when thicknesses are measured at substantially equally-spaced four points in the circumferential direction C at each of any five to ten measurement sites in the extension direction, a difference (hereinafter sometimes referred to as thickness variation) between a maximum value and a minimum value of the thicknesses at all measurement points is preferably 500 μm or less. The four points measured along the circumferential direction C are preferably spaced by 90 degrees.

In addition, in the pipe 1, when thicknesses are measured at substantially equally-spaced four points in the circumferential direction C at each of any five to ten measurement sites among which at least one site is present at the bending part, in the extension direction, a difference (thickness variation) between a maximum value and a minimum value of the thicknesses at all measurement points is preferably 500 μm or less. Furthermore, in the pipe 1, when thicknesses are measured at substantially equally-spaced four points in the circumferential direction C at each of any five to ten measurement sites of which the half or more are present at the bending part, in the extension direction, a difference (thickness variation) between a maximum value and a minimum value of the thicknesses at all measurement points is preferably 500 μm or less. As described above, in the pipe 1, the thickness deviation is unlikely to occur at the time of molding, and the thickness variations are easily controlled.

The thickness of the pipe 1 can be measured by the following method.

(Method for measuring pipe thickness)

The thickness of the pipe is measured by cutting the measurement sites of the pipe to produce cross sections, and observing the cross sections with a microscope ("VHX-1000" manufactured by KEYENCE CORPORATION). The difference between the outer diameter and the inner diameter of the pipe is taken as the pipe thickness (unit: mm). The measurement of the thicknesses of the pipe is performed at substantially equally-spaced four points in the circumferential direction C at each of any five to ten sites in the extension direction. The arithmetic mean value of the measurement values is taken as the thickness of the pipe.

In addition, the thickness variation of the pipe can be measured by the following method.

(Method for measuring thickness variation)

The cross sections of the measurement sites are observed by the above-mentioned method to obtain a maximum value and a minimum value of the thicknesses at all measurement points when the thicknesses are measured at substantially equally-spaced four points in the circumferential direction C at each of any five to ten measurement sites in the extension direction. The difference between the obtained maximum and minimum values is taken as the thickness

variation (unit: mm) of the pipe.

The above-mentioned thickness variation of the pipe 1 is preferably 450 μm or less, more preferably 400 μm or less, and even more preferably 350 μm or less. The theoretical lower limit value of the above-mentioned thickness variation is 0 μm.

The thickness variation can be adjusted within the range of ordinary trials and errors, using the above-mentioned resin composition as the material, and by controlling the molten resin temperature, the metal mold temperature, the time taken until the pressurized fluid is injected after injecting the molten resin into the metal mold, the pressure applied to the pressurized fluid, and the like.

The curvature radius of the bending part 1R of the pipe 1 is preferably 10 mm or less, and more preferably 8 mm or less. The curvature radius of the bending part 1R is preferably 2 mm or more. When the curvature radius falls within this range, the size of the pipe as a whole can be reduced, which makes it possible to increase the degree of freedom in shape.

The "curvature radius" is obtained by measuring the recessed side part when viewing the bending part 1R from the viewpoint where the curve is the largest on the outer surface of the bending part 1R.

According to the pipe 1 constituted as described above, a novel resin-made pipe in which a thickness deviation is prevented and the weight is reduced can be provided.

Although suitable embodiment examples according to the present invention have been described above with reference to the accompanying drawings, the present invention is not limited to such examples. The various shapes, combinations, and the like of the constituent members described in the above-mentioned examples are examples, and can be variously changed based on design requirements and the like within the range not deviating from the gist of the present invention.

Examples

Hereinafter, the present invention will be described with reference to examples, but the present invention is not limited to these examples.

In the present examples, the following measurement methods were employed.

(Melt viscosity)

The melt viscosity of the resin composition was measured according to the above-mentioned (Method for measuring melt viscosity).

(Flow starting temperature)

The flow starting temperature of the resin composition was measured according to the above-mentioned (Method for measuring flow starting temperature).

In the following examples, the following liquid crystal polyesters (liquid crystal polymers) which were commercially available products were used as the liquid crystal polymers.

[Manufacturing Example 1 (resin 1)]

Into a reactor equipped with a stirrer, a torque meter, a nitrogen gas inlet tube, a thermometer, and a reflux condenser were added 1034.99 g (5.5 mol) of 6-hydroxy-2-naphthoic acid, 378.33 g (1.75 mol) of 2,6-naphthalenedicarboxylic acid, 83.07 g (0.5 mol) of terephthalic acid, 272.52 g (2.475 mol) of hydroquinone, 1226.87 g (12 mol) of acetic anhydride, and 0.17 g of 1-methylimidazole as a catalyst. The torque meter is a device that measures the load applied to the stirrer.

While stirring the mixture in the reactor under nitrogen gas flow after replacing the gas inside the reactor with nitrogen gas, the temperature was raised from room temperature (23°C) to 145°C over 15 minutes to cause reflux at 145°C for 1 hour.

Subsequently, the temperature was raised from 145°C to 310°C over 3.5 hours and maintained at 310°C for 3 hours while continuing to stir the mixture to distill off acetic acid generated in the polymerization reaction and unreacted acetic anhydride. The contents were taken out from the reactor and cooled to room temperature to obtain a prepolymer that was a solid.

The obtained prepolymer was ground, and the obtained powdery prepolymer was heated by raising the temperature from room temperature to 250°C over 1 hour in a nitrogen atmosphere. The prepolymer was further heated by raising the temperature from 250°C to 320°C over 10 hours, and the temperature was maintained at 320°C for 5 hours to perform solid phase polymerization.

The reactant was cooled to room temperature to obtain a powdery liquid crystal polyester (resin 1). The flow starting temperature of the resin 1 was 320°C.
The resin 1 contained 55 mol% of the repeating unit (1) having a 2,6-naphthylene group, 17.5 mol% of the repeating unit (2) having a 2,6-naphthylene group, 5 mol% of the repeating unit (2) having a 1,4-phenylene group, and 22.5% of the repeating unit (3) having a 1,4-phenylene group with the total amount of all of the repeating units being 100 mol%.

[Manufacturing Example 2 (resin 2)]

Into a reactor equipped with a stirrer, a torque meter, a nitrogen gas inlet tube, a thermometer, and a reflux condenser were added 994.5 g (7.2 mol) of p-hydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1347.6 g (13.2 mol) of acetic anhydride.
After replacing the gas inside the reactor with nitrogen gas, 0.18 g of 1-methylimidazole was added as a catalyst, and while stirring the mixture in the reactor under nitrogen gas flow, the temperature was raised from room temperature (23°C) to 150°C over 30 minutes to cause reflux at 150°C for 30 minutes.
Subsequently, the temperature was raised from 150°C to 320°C at a temperature rising rate of 10°C/10 minutes while adding 2.4 g of 1-methylimidazole to distill off the by-produced acetic acid and unreacted acetic anhydride. After raising the temperature, the contents were taken out from the reactor and cooled to room temperature to obtain a prepolymer that was a solid.
The obtained prepolymer was ground, and the obtained powdery prepolymer was heated by raising the temperature from room temperature to 250°C over 1 hour in a nitrogen atmosphere. The prepolymer was further heated by raising the temperature from 250°C to 295°C over 5 hours, and the temperature was maintained at 295°C for 3 hours to perform solid phase polymerization.
The reactant was cooled to room temperature to obtain a powdery liquid crystal polyester (resin 2). The flow starting temperature of the resin 2 was 327°C.
In addition, the following raw materials were used in the following examples.

Plate-like filler 1: mica (J-31M (manufactured by YAMAGUCHI MICA CO., LTD., volume average particle diameter: 35 μm))
Plate-like filler 2: talc (GH50 (manufactured by HAYASHI KASEI CO., LTD., volume average particle diameter: 22 μm))
Fibrous filler: glass fibers (CS03JAPX-1 (manufactured by Owens Corning Corporation, fiber diameter: 10 μm, fiber length: 3 mm)

(Examples 1 and 2 and Comparative Example 1)

A liquid crystal polyester resin composition in which a liquid crystal polyester and a filler were mixed at the ratio shown in Table 1 below was supplied to a co-rotating twin-screw extruder with a screw diameter of 30 mm ("PCM-30" manufactured by Ikegai Tekkou Corporation), and melt-kneaded to be pelletized. Thus, pellets of Examples 1 and 2 and Comparative Example 1 were obtained. Numerical values in the table indicate parts by mass.

[Table 1]

| | | Example 1 | Example 2 | Comparative Example 1 |
|---|---|---|---|---|
| Resin 1 (part by mass) | | 70 | 70 | - |
| Resin 2 (part by mass) | | - | - | 70 |
| Mica (part by mass) | | 30 | | - |
| Talc (part by mass) | | - | 30 | - |
| GF (part by mass) | | - | - | 30 |
| Flow starting temperature (°C) | | 322 | 322 | 325 |
| Melt viscosity (Pa·s) | At flow starting temperature (B) | 170 | 150 | 10,000 |
| | At flow starting temperature + 20°C (A) | 68 | 80 | 80 |
| B/A | | 2.5 | 1.9 | 125 |

As shown in Table 1, the liquid crystal polyester resin compositions of Examples 1 and 2 satisfy Formula (A), whereas the liquid crystal polyester resin composition of Comparative Example 1 does not satisfy Formula (A).

$$B/A \leq 10 \qquad (A)$$

(A is a melt viscosity of the liquid crystal polyester resin composition at a temperature being a flow starting temperature + 20°C, and
B is a melt viscosity of the liquid crystal polyester resin composition at the flow starting temperature.)

The pipe 10 having the bending part 10R and the elongated part 10S shown in FIG. 4 was molded using each of the obtained compositions by a method similar to the manufacturing method shown in FIGS. 2 and 3.

For molding, an injection molding machine (manufactured by TOYO MACHINERY & METAL CO., LTD., model number: TOYO PLASTAR TP-180H) was used. The molding conditions were as follows: a cylinder temperature of 350°C, a metal mold temperature of 80°C, a resin injection rate of 30 mm/second, a ball (floating core) diameter of 15 mm, and a gas delay time of 3.2 seconds.

The obtained pipe 10 had a total length of 400 mm, a length of the elongated part 10S of 20 cm, an outer diameter of 16 mm, and a ratio of the inner diameter to the outer diameter of 0.884. Furthermore, the curvature radius of a part X having the smallest curvature radius in the bending part 10R was 10 mm.

The following measurements were performed on the resin composition used for manufacturing the pipe.

(Flexural elasticity modulus)

The flexural elasticity modulus was measured according to the above-mentioned (Method for measuring flexural elasticity modulus) using the liquid crystal polyester resin composition in which a liquid crystal polyester and a filler were mixed at the ratio shown in Table 1.

Regarding the obtained flexural elasticity modulus, the flexural elasticity modulus in the MD direction to the flexural elasticity modulus in the TD direction (MD direction/TD direction) was obtained, and the elastic modulus anisotropy was obtained.

The following measurements were performed on the obtained pipe.

(Tensile failure strength)

The tensile failure strength of the pipe was measured according to the above-mentioned (Method for measuring tensile failure strength).

(Pipe thickness)

The thickness of the pipe was measured according to the above-mentioned (Method for measuring pipe thickness) by cutting the measurement sites of the pipe to produce cross sections.

In Examples 1 and 2 and Comparative Example 1, the "measurement sites of the pipe" at which the cross sections were produced were any seven sites in the extension direction in Examples 1 and 2, and were any six sites in the extension direction in Comparative Example 1. Five sites out of seven sites were in bending parts among the measurement sites of the examples, and four sites out of six sites were in bending parts among the measurement sites of the comparative example.

(Method for measuring thickness variation)

The thickness variation of the pipe was measured according to the above-mentioned (Method for measuring thickness variation).

(Arithmetic mean roughness (Ra))

The arithmetic mean roughness (Ra) was measured according to the above-mentioned (Method for measuring arithmetic mean roughness (Ra)).

Table 2 shows the measurement results. In the table, "No. 1", "No. 2", "No. 3", and "No. 4" are written for each of the test pieces for which the tensile failure strength was measured.

[Table 2]

| | | Example 1 | Example 2 | Comparative Example 1 |
|---|---|---|---|---|
| Flexural elasticity modulus | Extension direction (Gpa) | 16.7 | 8.8 | 17.8 |
| | Circumferential direction (Gpa) | 7.2 | 4.0 | 3.2 |
| | Elastic modulus anisotropy (MD direction/TD direction) | 2.3 | 2.2 | 5.6 |
| Tensile failure strength (N) | No. 1 | 277 | 301 | 193 |
| | No. 2 | 248 | 240 | 220 |
| | No. 3 | 211 | 251 | 163 |
| | No. 4 | 242 | 251 | 202 |
| | Average | 245 | 261 | 195 |
| Pipe thickness (maximum value, mm) | | 1.20 | 1.13 | 1.24 |
| Thickness variation (mm) | | 0.32 | 0.31 | 0.52 |
| Arithmetic mean roughness (Ra) of inner surface (μm) | | 3.1 | 3.2 | 4.5 |

As a result of evaluation, the elastic modulus anisotropy was smaller in Examples 1 and 2 than in Comparative Example 1. It was also revealed that the tensile failure strength was lower in Comparative Example 1 than in Examples 1 and 2. From these results, it was suggested that the pipes of the examples had a smaller orientation of the liquid crystal polyester constituting the pipes and a higher compressive strength than the pipe of Comparative Example 1.

From the above results, it was revealed that the present invention is useful.

Reference Signs List

1, 10: Pipe (resin-made pipe)
1R, 10R: Bending part
C: Circumferential direction
E: Extension direction

## Claims

**1.** A resin-made pipe comprising:

a liquid crystal polyester resin composition as a formation material,
wherein the pipe has a bending part,
a melt viscosity of the liquid crystal polyester resin composition satisfies Formula (A), and
an arithmetic mean roughness (Ra) of an inner surface of the pipe in an extension direction is 0.2 μm or more and 5 μm or less,

$$B/A \leq 10 \qquad (A)$$

wherein A is a melt viscosity of the liquid crystal polyester resin composition at a temperature being a flow starting temperature + 20°C, and B is a melt viscosity of the liquid crystal polyester resin composition at the flow starting temperature.

**2.** The resin-made pipe according to Claim 1,

wherein the liquid crystal polyester resin composition comprises a liquid crystal polyester having a repeating unit represented by Formula (1), a repeating unit represented by Formula (2), and a repeating unit represented by Formula (3), and
a content of the repeating unit having a 2,6-naphthylene group in the liquid crystal polyester is 40 mol% or more and 75 mol% or less based on all of the repeating units,

(1) $-O-Ar^1-CO-$

(2) $-CO-Ar^2-CO-$

(3) $-X-Ar^3-Y-$

wherein in the formulas, $Ar^1$ represents a 2,6-naphthylene group, a 1,4-phenylene group, or a 4,4'-biphenylylene group; $Ar^2$ and $Ar^3$ each independently represent a 2,6-naphthylene group, a 1,4-phenylene group, a 1,3-phenylene group, or a 4,4'-biphenylylene group; X and Y each independently represent an oxygen atom or an imino group (-NH-); and hydrogen atoms of the group represented by $Ar^1$, $Ar^2$, or $Ar^3$ may be each independently substituted with a halogen atom, an alkyl group, or an aryl group.

3. The resin-made pipe according to Claim 1 or 2,
wherein the liquid crystal polyester resin composition comprises a plate-like filler.

4. The resin-made pipe according to any one of Claims 1 to 3,
wherein the resin-made pipe has a total length of 300 mm or more, an outer diameter of 5 mm or more and a ratio of an inner diameter to the outer diameter is equal to or more than 0.6 and less than 1.

5. The resin-made pipe according to any one of Claims 1 to 4,
wherein when thicknesses are measured at substantially equally-spaced four points in a circumferential direction at each of any five to ten measurement sites in the extension direction, a difference between a maximum value and a minimum value of the thicknesses at all measurement points is 500 μm or less.

6. The resin-made pipe according to any one of Claims 1 to 5,
wherein the bending part has a part having a curvature radius of 10 mm or less.

7. The resin-made pipe according to any one of Claims 1 to 6,
wherein A is 5 Pa·s or more and 200 Pa·s or less.

FIG. 1

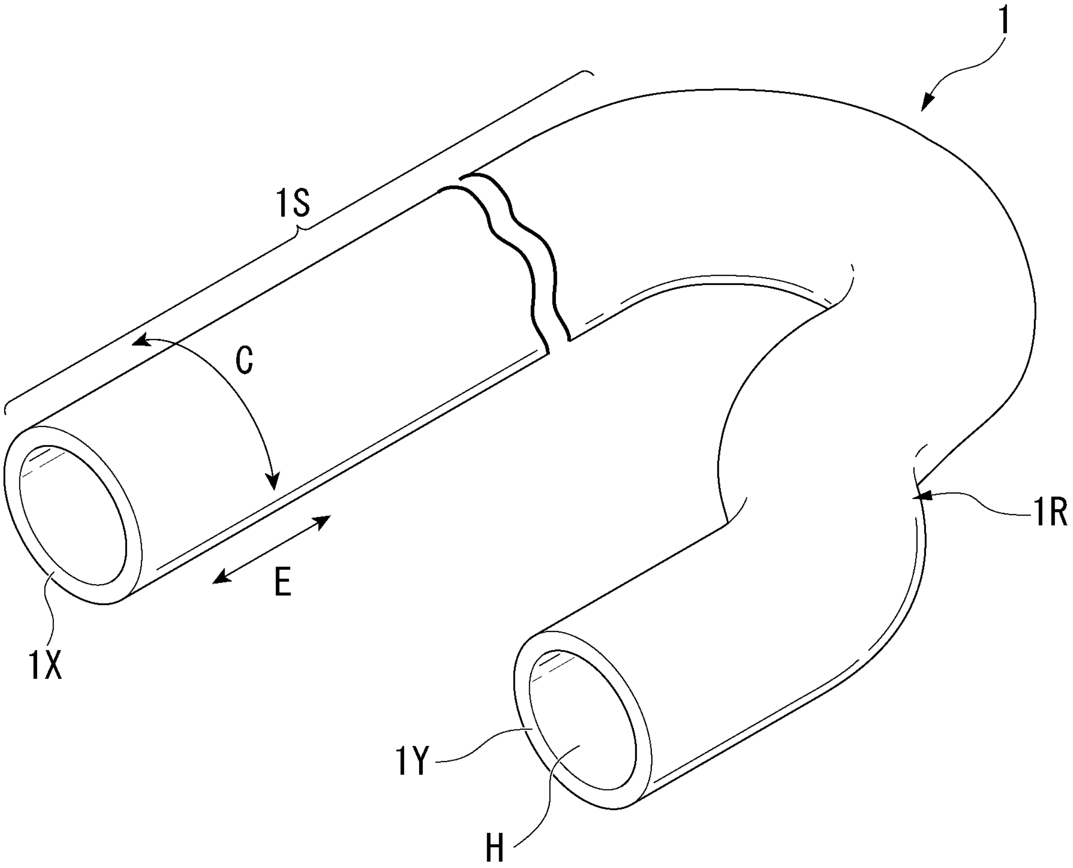
1
1S
C
E
1X
1R
1Y
H

FIG. 2

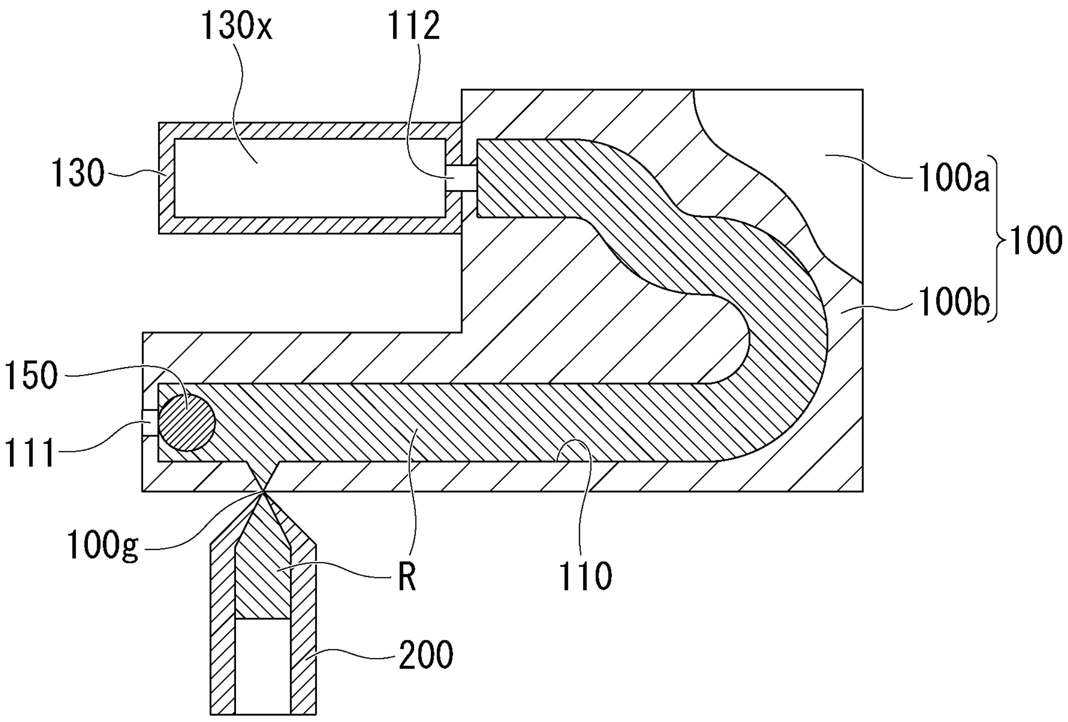
130x
112
130
100a
100
100b
150
111
100g
R
110
200

FIG. 3

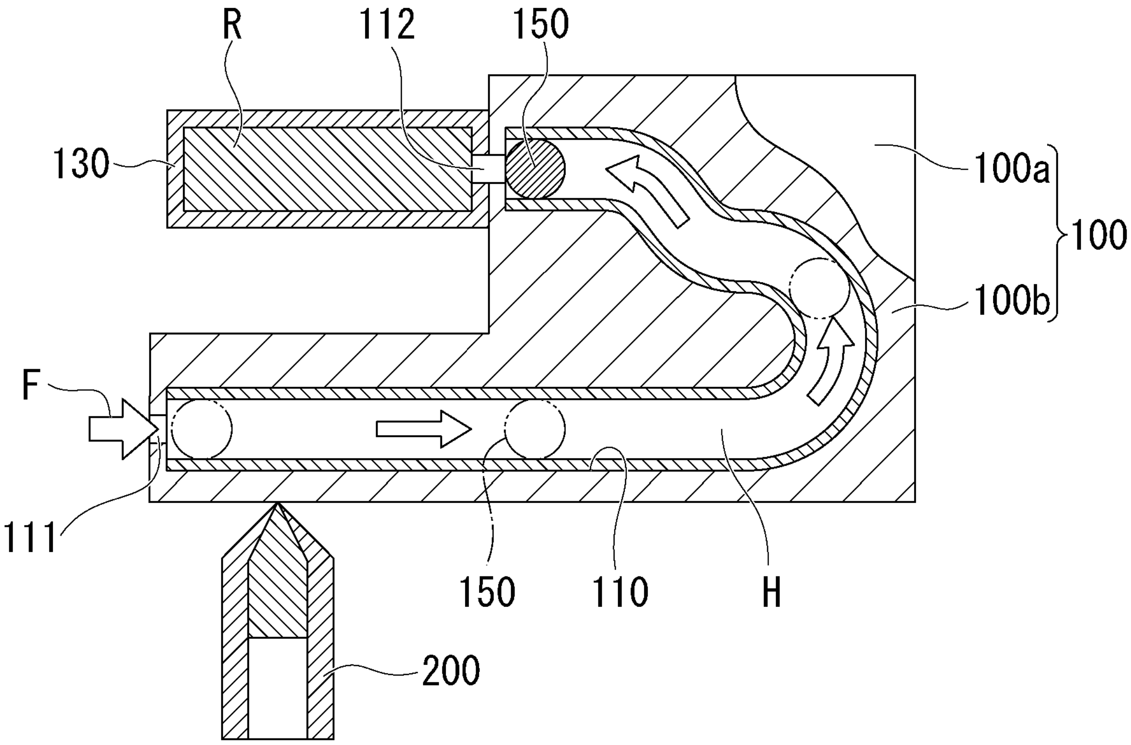


FIG. 4

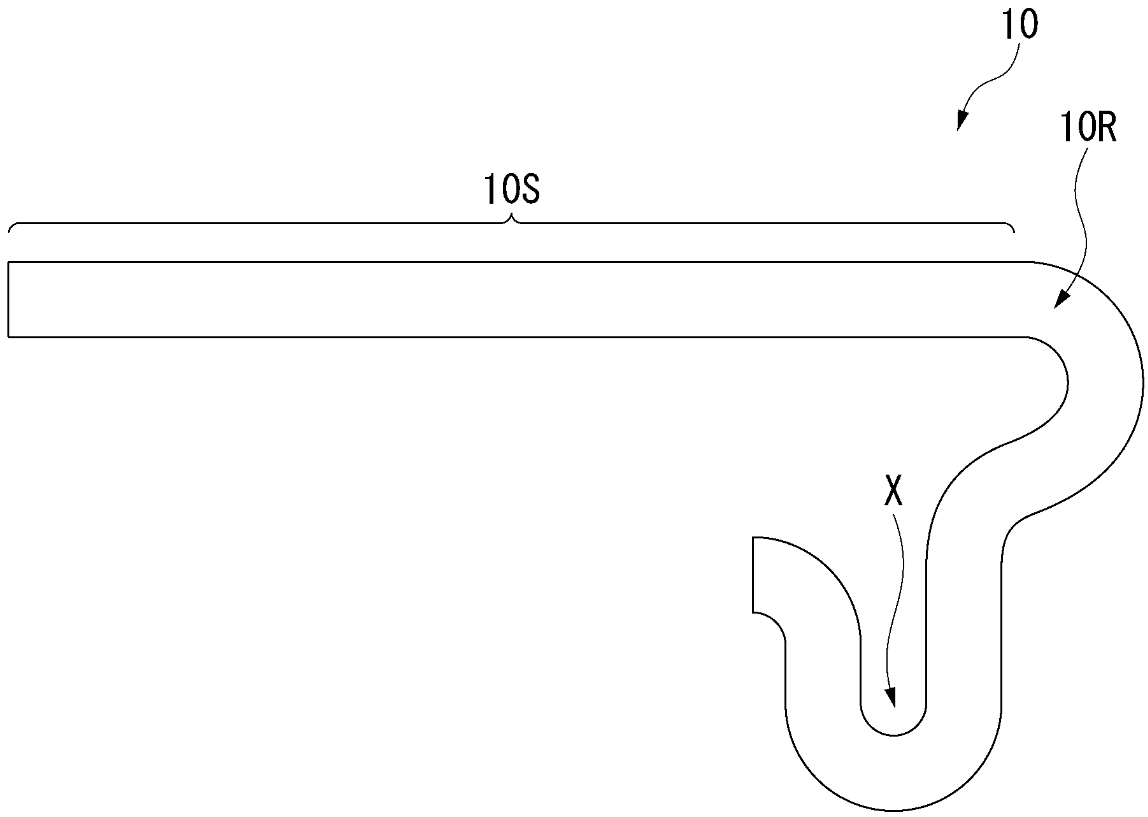

## INTERNATIONAL SEARCH REPORT

International application No. **PCT/JP2021/042486**

**A. CLASSIFICATION OF SUBJECT MATTER**

***B29C 45/37***(2006.01)i; ***C08L 67/00***(2006.01)i; ***C08G 63/60***(2006.01)i; ***F16L 11/06***(2006.01)i; ***F16L 43/00***(2006.01)i
FI: F16L11/06; F16L43/00; C08G63/60; C08L67/00; B29C45/37

According to International Patent Classification (IPC) or to both national classification and IPC

**B. FIELDS SEARCHED**

Minimum documentation searched (classification system followed by classification symbols)

B29C45/37; C08L67/00; C08G63/60; F16L11/06; F16L43/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 7-156210 A (NIPPON PETROCHEMICALS CO LTD) 20 June 1995 (1995-06-20) paragraphs [0008]-[0045], fig. 1 | 1-7 |
| Y | JP 2000-63503 A (SUMITOMO CHEM CO LTD) 29 February 2000 (2000-02-29) paragraphs [0008]-[0086] | 1-7 |
| A | JP 2013-56481 A (ASAHI KASEI CHEMICALS CORP) 28 March 2013 (2013-03-28) | 1-7 |
| A | JP 8-229992 A (RP TOPLA LTD) 10 September 1996 (1996-09-10) | 1-7 |
| A | US 2012/0015066 A1 (WHITE, David J.) 19 January 2012 (2012-01-19) | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 January 2022** | **01 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/042486**

| Patent document cited in search report | Publication date (day/month/year) | Patent family member(s) | Publication date (day/month/year) |
|---|---|---|---|
| JP 7-156210 A | 20 June 1995 | (Family: none) | |
| JP 2000-63503 A | 29 February 2000 | US 6296930 B1<br>specification, column 2, line 50 to column 30, line 49<br>EP 0964014 A2 | |
| JP 2013-56481 A | 28 March 2013 | (Family: none) | |
| JP 8-229992 A | 10 September 1996 | US 5948343 A<br>WO 96/26062 A1<br>EP 0757936 A1 | |
| US 2012/0015066 A1 | 19 January 2012 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020191506 A
- JP 2009281636 A


### Non-patent literature cited in the description


- Liquid Crystal Polymers - Synthesis/Molding/Application. CMC Publishing CO., LTD, 05 June 1987, 95